# EUROPEAN PATENT APPLICATION

(11) **EP 1 566 094 A1**
(43) Date of publication of application: **24.08.2005**
(21) Application number: 02783615.4
(22) Date of filing: 25.11.2002
(51) Int. Cl.: A01G 13/00, A01M 21/00, A01N 59/06, A01N 61/00

(54) **WEED-CONTROLLING MULCHING COMPOSITION**

(71) Applicant: National Institute for Rural Engineering, Ibaraghi-ken 305-8609 (JP); Tobu Kagaku Kabushiki Kaisha, Saitama 340-0113 (JP)
(72) Inventor: Fujimori, Shinsaku, National Inst. for Rural Eng., Tsukuba-shi, Ibaraki 305-8609 (JP); Kobori, Shigeji, Tobu Kagaku K. K., Satte-shi, Saitama 340-0113 (JP)
(74) Representative: W.P. Thompson & Co.
(86) International application number: PCT/JP2002/012270
(87) International publication number: WO 2004/047519

(57) **Abstract**

To provide a mulching technique which is excellent in weatherability and waterproofness, exerts a high anti-erosion effect on inclined lands, is efficacious in inhibiting the growth of weeds in agricultural and non-agricultural lands and preventing outflow of soil and formation of muddy water accompanying rainfall and makes it possible to control soil temperature. A weed-controlling material includes as the main component a slurry comprising from 3 to 30% by weight of magnesia cement having a chemical composition comprising lightly baked magnesia and being non-stoichiometric and from 97 to 30% by weight of water.

## Description

### TECHNICAL FIELD TO WHICH THE INVENTION BELONGS

The present invention relates to a mulching technique which inhibits the growth of weeds in agricultural and non-agricultural lands, prevents outflow of soil and formation of muddy water accompanying rainfall, and makes it possible to control soil temperature. More particularly, the present invention relates to a liquid or scale-like molded product mulching composition having a chemical composition containing lightly baked magnesia and including nonstoichiometric magnesia cement.

### PRIOR ART

Much effort is needed for weed killing in agricultural and non-agricultural lands. Moreover, a large amount of herbicide is used. This leads to global destruction of water environment to affect animals and plants seriously. Currently it is campaigned to use reduced amounts of agricultural chemicals. If the amounts of herbicides used are reduced to a fraction of the currently used amounts, the water environment will be presumably improved considerably.

Weed killing has been conventionally performed by various methods including pulling up of weeds by manpower, by use of motive energy of a mowing machine, and by use of herbicides. Further, a method of controlling weeds by covering them with a weed-controlling sheet or by film mulching is widely used. In particular, the film mulching makes farmers free from the work of pulling up weeds and has many functions such as control of soil temperature, moisture retention in soil, fertilizer retention in soil, inhibition of pests, and prevention of erosion. However, since the film is made of a polymer film whose waste treatment is difficult and burning of which causes environmental pollution, a problem of post-treatment arises.

Most components of a herbicide are effective to ordinary life conditions of vegetation, without inhibiting budding of seeds in a dormant state and rooting of vegetative organs such as rootstalks in a dormant state. On the other hand, to provide a method that enables control of weed schizonts in a dormant state, the activity of abscisic acid has been studied in tandem with other growth inhibitors. As a result, it has been elucidated that the growth is triggered by antagonistic action of plant hormones such as cytokinin, gibberellin, and oxine. Accordingly, it is conceived that if the activity of abscisic acid is enhanced or the influence of plant hormones on abscisic acid is inhibited to regulate the growth of the plants, the combat with weeds in agriculture will be ceased. Moreover, the crop yields of farmed goods will be greatly increased and man-power can be saved considerably.

In recent years, liquid mulching and solid mulching with inorganic substances have also been tried. Cement has a high pH of 14 and causes crop injury when directly contacted with agricultural crops, so that cement cannot be used directly to the agricultural crops. Lime has no self-hardening property and has a high pH of 14 to cause so-called "burn" when applied directly to agricultural crops to damage the growth of the agricultural crops. Gypsum has self-hardening property. However, it has no water resistance and is unsuitable for use in mulching. Therefore, in the conventional liquid mulching, a method of applying a mixture of glue material with inorganic powder, or pulp, wood chip, paper or the like has been adopted (for example, Patent Document 1). Those methods are widely used for greening inclined lands and a mixture containing seeds is blown. However, the composition of the mixture that is suitable for greening has a drawback that it has low weatherability and low waterproofness and hence exerts low anti-erosion effect on inclined lands.

JP 2001-231378 A discloses a prior art.

### Disclosure of the Invention

To solve the above-mentioned problems, the inventors of the present invention have made extensive research and as a result have found that it is extremely effective to use magnesia cement having a chemical composition comprising lightly baked magnesia and being non-stoichiometric as the main component of a mulching material, thereby solving the various problems of the conventional mulching. The present invention is accomplished based on the finding.

More particularly, the present invention relates to a weed-controlling mulching composition comprising a slurry comprising from 3 to 30% by weight of magnesia cement having a chemical composition comprising lightly baked magnesia and being non-stoichiometric and from 97 to 30% by weight of water. By applying the weed-controlling mulching composition of the present invention to the surface of soil, weeds can be controlled.

The present invention includes the following aspects.

The weed-controlling mulching composition can further contain a glue material. In this case, the film-forming property improves when the weed-controlling mulching composition is applied to the surface of the soil.

The weed-controlling mulching composition can further contain a herbicide, particularly glyphosate. In this case, the effect of killing the weeds improves when the weed-controlling mulching composition is applied to the surface of the soil.

The weed-controlling mulching composition can further contain a colorant. In this case, the effect of controlling soil temperature can be obtained when the weed-controlling mulching composition is applied to the surface of the soil.

The weed-controlling mulching composition can further contain a fertilizer. In this case, the effect of sufficiently distributing the fertilizer to trees that needs the fertilizer can be obtained when the weed-controlling mulching composition is applied to the surface of the soil.

The weed-controlling mulching composition can further contain a foaming agent. In this case, the effect of forming a heat insulating layer on the surface of the soil can be obtained when the weed-controlling mulching composition is applied thereto.

The weed-controlling mulching composition of the present invention can be molded into scales and applied in a solid state in addition to the case where it is applied to the surface of the soil in a liquid state as described above.

Further, the weed-controlling mulching composition of the present invention can be used in a one-pack type form in which all the above-mentioned components are mixed when actually applied to the surface of the soil. In addition, the above-mentioned effects of the present invention can be obtained by dividing the above-mentioned components (or individual components in each component) into a plurality of groups, storing them in a multi-component type form, and when in use, applying the respective components that have been divided into the plurality of groups to form the multi-component type form.

According to the present invention, it is possible to perform mulching contemplated to control budding of weeds in agricultural and nonagricultural lands, prevent outflow of soil and formation of muddy water accompanying rainfall, and make it possible to control soil temperature, thereby helping to solve the problem of environmental pollution.

### Embodiment Mode of the Invention

Hereinafter, the present invention will be explained in detail. The nonstoichiometric magnesia cement having a chemical composition containing lightly baked magnesia, used in the present invention, includes a self-hardening cement which is an acescence or alkalescence cement having a PH of 10.5 to 4.5, is obtained by reacting hardener such as phosphoric acid, carbonic acid, halide thereof, a sulfate, or a silicate in a small amount not equivalent to a chemical equivalent weight, with a single or mixture of lightly baked serpentine containing as a main component magnesium hydrate, lightly baked magnesia or magnesium, lightly baked olivine, akermanite, diopside, forsterite, enstatite, iron making slag, stainless slag, nickel slag, and electrolytic iron slag, and which contains organic acids such as citric acid, tartaric acid, humic acid, or ligninic acid and gypsum as the reaction auxiliary agent.

Specific examples thereof include nonstoichiometric magnesia phosphate cement, nonstoichiometric magnesia carbonate cement, nonstoichiometric magnesia chloride cement, nonstoichiometric magnesia sulfate cement, and nonstoichiometric silicate magnesia cement. Nonstoichiometric magnesia phosphate cement is a reactant of citric acid-soluble substances, including lightly baked magnesia or heavy-burned magnesia as the main component, gypsums such as hemihydrate gypsum and anhydrous gypsum, hardening components such as phosphate fertilizer, in particular phosphoric acids such as triple superphosphate, superphosphate, heavy-burned phosphorous, melting phosphorous, metaphosphate, or polyphosphate as accessory components. Nonstoichiometric magnesia carbonate cement includes compositions having alkalescent or normal carbonates such as sodium bicarbonate, potassium bicarbonate, ethylene carbonate, propylene carbonate, guanidine carbonate, glyoxal, γ-lactone, and ethylene glycol acetate as the hardening component.

Nonstoichiometric magnesia chloride cement includes lightly baked magnesia and magnesium chloride, and is obtained with compounds with improved water resistance, and intermediate compositions of nonstoichiometric magnesia chloride cement and nonstoichiometric magnesia sulfate cement, and by substituting magnesium sulfate for the magnesium chloride to be added of conventional magnesia cement (oxychloride cement). Nonstoichiometric magnesia sulfate cement includes components that react lightly baked magnesia or magnesium hydroxide as a main component, and sulfate compositions such as potassium sulfate, alum, aluminum sulfate, magnesium sulfate, and acid soda sulfate with each other. The nonstoichiometric magnesia silicate cement is, in a compound containing water glass of silicate and silica sol, a cement composition including 10 to 50% by weight and a small amount of hardening component in the range of a non-chemical equivalent weight, and is, as an essential condition, the substance for providing composite hardened products when reacting with the magnesium hydroxide generated when magnesia reacts with water.

These can be mixed and blended before use, or the above-mentioned components of the composition can be individually applied or simultaneously applied through a plurality of nozzles for spraying to form a mixture, as necessary. However, these should not be substances that form films on or cover plants in such a manner that the respiratory effect of plants is inhibited considerably. For example, simple lightly baked magnesia, preferably nonstoichiometric phosphate magnesia cement is made up of 7 to 20 parts by weight of triple superphosphate, 9 to 23 parts by weight of superphosphate, 9 to 23 parts by weight of heavily calcined phosphate, and 10 to 25 parts by weight of fused phosphate per 40 to 85 parts by weight of lightly baked magnesia and 10 to 20 parts by weight of gypsum. The nonstoichiometric carbonate magnesia cement is made up of 7 to 20 parts by weight of sodium bicarbonate, 7 to 20 parts by weight of potassium bicarbonate, 7 to 20 parts by weight of ethylene carbonate, 7 to 20 parts by weight of guanidine carbonate. The stoichiometric chloride magnesia cement is made up of 15 to 25 parts by weight of magnesium chloride and 10 to 20 parts by weight of magnesium sulfate, 3 to 20 parts by weight of potassium sulfate, alum, aluminum sulfate, or magnesium sulfate, 3 to 20 parts by weight of water glass or silica sol.

However, strongly alkaline substances and strong electrolytes may adversely affect plants depending on their use amount, so that their use amount must be limited. These substances have some inhibitory effects on budding of seeds and activity of the growth points of rootstalks and are suitable for controlling weeds. Since the substances exhibit their effects by contact, they exhibit the weed-controlling effect when they penetrate into the soil or cover the soil. To obtain appropriate concentrations in the soil or covering thicknesses on the soil, it is necessary to impart the slurry of the nonstoichiometric magnesia cement with appropriate viscosity to adjust the penetration speed into the soil or adjust the viscosity so that the soil can be covered to an appropriate thickness depending on the penetrability of the substances into the soil. For this purpose, a viscosity improver that adjusts the viscosity of the slurry or a surfactant that improves the penetrability is necessary.

The viscosity improver is a so-called "glue material". Naturally occurring glue materials include starch glue, gum arabic, carrageenan, hide glue, gelatin, casein, guar gum, mannan, sodium alginate, and natural rubber latex. The viscosity improver is added to water in amounts of 0.01 to 5% by weight. However, those substances that bond to metal ions to form gel, such as mannan and sodium alginate, are not directly mixed with the nonstoichiometric magnesia cement slurry; such substances are formulated as a two-pack composition with the nonstoichiometric magnesia and applied to paddy field or wet soil by a method of spraying the two-pack composition through a two-nozzle gun to mix them at the apex of the two-nozzle gun by utilizing the fast curing property of the mixture.

Examples of synthetic glue material include vinyl acetate, polyacrylic acid esters, partially saponified PVA, polyacrylic acid/polyacrylamide copolymer, vinylidene chloride, sodium polyacrylate, isobutylene/maleic acid copolymer salts, and cellulose derivatives such as CMC and HMC. Among these, the synthetic glue materials having a terminal carboxylic acid group or a terminal acid amide group that solidifies by reacting with the nonstoichiometric magnesia cement to react with the nonstoichiometric magnesia cement due to the activity of the terminal group to agglomerate or rapidly solidify, so that these are suitable for applying to the surface of the soil that is under the water or that is highly hydrated. However, emulsions that contain a surfactant used as the polymer emulsion may sometimes encounter emulsion destruction and hence those used for ordinary cement may be unsuitable. These are added in water in amounts of 0.01 to 5% by weight in the same way as the above. Moreover, examples of surfactant that can be used to improve the penetrability of the weed-controlling mulching composition include polyphosphates, alkyl ether carbonates, alkyl ether sulfates, alkyl ether naphthalenesulfonate, dialkyl sulfosuccinates, naphthalenesulfonates, and phosphoric acid ester salts, and cement water reducing agents such as polycarbonates and naphthalenesulfonic acid-formaldehyde condensates. These surfactants are used when the surface of the soil is rapped and hardened or for the purpose of penetrating the composition to a depth from the surface of the soil. Of course, the surfactants can be used in combination with the above-mentioned viscosity improver and the combinations are useful as a binder for the soil particles. However, since these additives should not be harmful to the environment of vegetation, they may be used only in limited places. These additives can be added in amounts of 0.005 to 0.5% by weight based on the weight of the slurry that includes about 97 to 30% by weight of water and about 3 to 30% by weight of nonstoichiometric magnesia cement.

Moreover, it is preferable to add a fertilizer component to the nonstoichiometric magnesia cement composition in advance. This is because when the surface of the soil is covered with the nonstoichiometric magnesia cement composition, it is difficult to apply the fertilizer from above the coverage of the composition or there is a fear that it takes some time for fertilizer to reach the roots of the vegetation for which the fertilizer is applied to decrease the efficiency of fertilizer application. In this case, to apply the fertilizer to young plants just after germination, it is necessary to add to the composition a fertilizer that is harmless to the plants and slow acting. The slow-acting fertilizer can be added in amounts of 0.1 to 5% by weight based on the weight of the slurry that includes about 97 to 30% by weight of water and about 3 to 30% by weight of nonstoichiometric magnesia cement.

For the weed-controlling mulching, it is necessary to color the mulching composition. The nonstoichiometric magnesia cement, which is used in the method used in film mulching, must by nature be white to reflect sunlight. To increase the efficiency of reflection, it is necessary to add a white colorant such as calcium carbonate, talc, white clay, or white sand to the nonstoichiometric magnesia cement to reflect the sunlight to decrease the soil temperature by about 5°C. The addition of the white colorant satisfies the necessity of inhibition of evaporation of the moisture in the soil, heat insulation, adjustment of water permeation, settlement of the soil by addition of a heavy material and so on. On the contrary, black powder can be added to the mulching composition for the purpose of increasing the light blocking effect and the soil temperature that are necessary in the weed-controlling mulching. For example, charcoal dust, graphite powder, stone powder, copper slug powder and so on can be added to the mulching composition to absorb the sunlight to increase the soil temperature by about 10°C. Moreover, a method involving causing the slurry that contains the nonstoichiometric magnesia cement, the glue material and the foaming agent to forcibly entrain air to form foams and applying the foams to the surface of the soil to cover it can be used. In this case, a colorant can be added to the foams to adjust the soil temperature to effect heat insulation. Moreover, making the best of the properties of the glue material, various types of foams from hard foams to elastic foams can be selected optionally.

The amount of the colorant to be added is preferably of 0.1 to 10% by weight based on the weight of the slurry that includes about 97 to 30% by weight of water and about 3 to 30% by weight of nonstoichiometric magnesia cement.

The amount of the foaming agent to be added is preferably of 0.1 to 10% by weight based on the weight of the slurry that includes about 97 to 30% by weight of water and about 3 to 30% by weight of nonstoichiometric magnesia cement.

Heretofore, in the weed-controlling mulching, a method of laying wastes of rice plant straw, wheat straw, corn, sugarcane and so on the ground and a method using waste paper, wood chip, bark mulch and so on have been used. These wastes tend to be blown off in wind and weather, so that the purpose of mulching cannot be attained completely. However, when these wastes are pulverized and mixed in amounts of 0.1 to 3% by weight based on the resultant mixture and applied to the surface of the soil, the mixture is fixed to the surface of the soil. In this case, the mixture can be used as a weed-controlling mulching composition that enables mulching that follows up tear strength and cracking of the soil. Moreover, paper mulching is difficult to cope with wind or up and down of water level. The waste paper, wood chip, bark mulch and so on are added to the nonstoichiometric magnesia cement and the mixtures are molded into scales. Similarly, chaff is added to the nonstoichiometric magnesia cement and the mixture is molded into balls. When these are molded so as to have a specific gravity of 1.5 or more, they can be used to stably cover the subsoil of the paddy field and are useful for paddy field mulching.

Weeds have very strong vital force and various kinds of herbicides depending on the purpose of weed controlling are newly produced. However, the herbicides have limited effects to resistant weeds that have acquired resistance to conventional herbicides. One approach is to expect an increase in the controlling effect by using mixed herbicides. The herbicides are supposed to act when they are applied to or absorbed by the weeds. However, the herbicides cannot inhibit germination of the seeds, so that the herbicides are not effective to the seeds of the weeds that are dormant in the soil. The nonstoichiometric magnesia cement is not a herbicide and acts on the growth point of the seeds and rootstalks to inhibit the germination regardless of the kind of the plant. Therefore, the nonstoichiometric magnesia cement has very potent weed-controlling activity to nongerminated seeds and rootstalks in the soil that are difficult to control with the conventional herbicides. This effect depends on the application amount and time after application of the nonstoichiometric magnesia cement. The nonstoichiometric magnesia cement is effective for 2 to 3 weeks from the application to the soil and the activity does not last for long time. As a result, no loss in time of farm work occurs. That is, when seeds are sown after the application of the nonstoichiometric magnesia cement, a method of partially masking the soil in advance, removing the masking, and then sowing seeds, a method of masking the soil in advance, digging a hole in the surface to which the seeds are sown, and sowing seeds, or a method of masking the soil in advance, digging a hole in the surface to which the seeds are sown, and laying down seedling can be used. Moreover, when the nonstoichiometric magnesia cement is applied directly to young farm crops after germination, no crop injury occurs. Accordingly, in this case, it is possible to treat the young farm crops with a concentrated nonstoichiometric magnesia cement slurry having a concentration of about 30% by weight. However, even the concentrated nonstoichiometric magnesia cement slurry has no weed-controlling effect to weeds during the growth or rootstalks. In this case, the nonstoichiometric magnesia cement can be applied together with, or before or after application of, various other herbicides. That is, the order of weed-controlling processes is as follows. First a herbicide that is effective to vigorously growing weeds is applied. Immediate after this, the nonstoichiometric magnesia cement slurry or powder is applied. This can control the weeds for a long time. When the herbicide is powder, a method of mixing the herbicide powder with the nonstoichiometric magnesia cement slurry and applying the resultant can be used. Alternatively, a method of preparing an aqueous solution of the herbicide in advance, and adding the nonstoichiometric magnesia cement to the aqueous solution to form slurry can be used. Moreover, it is possible to apply the nonstoichiometric magnesia cement slurry and then apply the herbicide. In this case, it is preferable that the application of these is performed while the height of the farm crops is still low. The types of the herbicide that can be mixed with the nonstoichiometric magnesia cement include MCP and chlomeprop of phenoxy series, fluazifop of allyloxyphenoxypropionic acid series, chlomethoxynil of diphenyl ether series, asulum and benthiocarp of carbamate series, arachlor and butachlor of amide series, dymuron and linuron of urea series, thifensulfuron methyl and pyrazosulfuron ethyl of sulfonylurea series, atrazine and simetrine of triazine series, pyridate andbentazone of diazine series, diquat and paraquat of bipyridinium series, trif luraline of dinitroaniline series, MDBA of aromatic carboxylic acid series, imazaquin ammonium salt of imidazolinone series, DPA of aliphatic series, and glyphosate and bialaphos of amino acid series. Only organic phosphate series herbicides cannot be used in combination. Nonselective herbicides of hydrochloric acid series can be used in combination with the nonstoichiometric magnesia cement. Although detailed explanation of dose regimen and diluted application dose of the above-mentioned herbicides depending on the type is omitted, according to one example, glyphosate is diluted 50 to 100 folds, 5 to 20% by weight of the nonstoichiometric magnesia cement is added to the diluted solution, and the resultant slurry is used. Use of the mixture of the herbicides with the nonstoichiometric magnesia cement or use of the herbicides and the nonstoichiometric magnesia cement in combination may give rise to different effects depending on how to select time when they are applied. In agricultural work, it is most effective to perform weed-controlling treatments in early spring when the growth activity of weeds is weak on the land out of cultivation and weed-controlling can be easily done throughout the year. Even when weed seeds come flying, it is possible to perform controlling the budding. For the weeding of paddy field or dry field out of cultivation, glyphosate is diluted 50 to 100 folds, 5 to 20% by weight of the nonstoichiometric magnesia cement is added to the diluted solution, and the resultant slurry is applied in an amount of 5 liters per square meter (m²). After 10 days from the application, it is possible to perform sowing seeds orplanting seedlings. In this case, it is necessary to lightly break the mulching layer. If the seeds are sown directly without lightly breaking the mulching layer, inhibition of growth occurs. In the case of performing the above-mentioned treatment with the mixture after the planting, naturally, it is necessary to select appropriate herbicides. When the herbicides are selected, the warnings and cautions on the herbicides provided by the manufacturers or vendors must be cared. To control the bottom weeds on forest lands and orchards, management of the bottom weeds is performed in combination with use of the selective herbicides. When this treatment is performed in winter or early spring, very effective weed-controlling effect can be obtained, so that mowing is unnecessary throughout the year.

The molded product mulching according to the present invention is a method of performing mulching by applying molded product that includes soil as a material and the nonstoichiometric magnesia cement as a solidifying agent and that is in the form of granules or scales to the land surface. It is preferable that the molded product has a specific gravity of 1.2 to 2.0 and has a shape that makes the product stable, not floatable in water and not washoutable. In the case of paddy field mulching, it is particularly preferable that the product has a scale-like shape. It is preferable that the molded product is applied after rice transplanting and settles down in the water to mask the surface of the soil flatly. The granule mulching is a method of preventing erosion and washout of the surface soil by laying the granules to a thickness of 20 mm or more on sandy soil and the land where it rains much. This method has an advantage that the soil in situ can be utilized, supplements the disadvantage of the conventional method using waste agricultural products that the mulch is light in weight and thus weak for wind and weather and solves the problem that the conventional method cannot be expected for the weed-controlling effect.

To obtain a mulching material having a shape suitable for weed-controlling shape, waste paper or wood chip and bacchus as auxiliary agents, a glue material as a binder, sand or crushed stone powder or the like for increasing the specific gravity of the composition can be mixed. The mixture is classified depending on the shape of particle and size using a sieve or the like before use. On the other hand, in liquid mulching, a solidifying agent that is used for solidifying surface soil to prevent washout of clay, such as for a countermeasure for red water due to the washout of the surface soil, for preventing erosion of inclined land, and for preventing destruction of the formed ridges of earth, and that is safe from the environmental pollution in civil engineering and agricultural work is demanded. According to the present invention, it has been found that only application of thenonstoichiometric magnesia cement slurry is sufficient for its penetration into the soil and its formation of a solidified film on the surface of the soil, which is effective in preventing the destruction of the soil. The liquid mulching is simple and easy and is also extremely useful for greening or as a countermeasure for protecting banks and water channels, preventing aeolian sand transport as well as sand erosion control as a method of preventing the destruction of the soil, which is different from the purpose of controlling weeds.

In the case of film mulching, top-dressing and water spray are difficult. However, by the method of the present invention high water permeability is obtained, which is advantageous in that the management with top-dressing and water spray canbe easily performed. Moreover, a fertilizer can be added to the nonstoichiometric magnesia cement in advance. In particular, in post-mulching in which the mulch contacts the crop directly, a slow-acting fertilizer is preferable and such can be applied as a mixture with nonstoichiometric magnesia cement.

Both the chemical composition containing lightly baked magnesia and the nonstoichiometric magnesia cement are used as fertilizers and food additives and hence the composition of the present invention is a weed-controlling mulching composition that includes safe components. It is elucidated that germination of seeds and rooting of plants proceed with appropriate amounts of water, appropriate temperature, and presence of oxygen and light as well as stimulations by growth hormones. The weed-controlling effect to prevent the germination and rooting is not obtained by merely solidifying the soil to prevent the growth of the weeds. Nutritional injury to the vegetation by addition of much magnesium ion affects the germination and rooting. In vivo laboratory tests demonstrated that when the concentration of the magnesium ion in an agar medium is at a certain concentration or more, 100% germination and 100% rooting were suppressed successfully. Moreover, planter tests and field tests also confirmed the weed-controlling effects of the mulching composition of the present invention.

In recent years, essential metal deficiency diseases of vegetation is being elucidated and the influences of antagonism and interaction between different kinds of metals are being elucidated. However, physiological effects of various other metals when a single metal is added to a large amount of vegetation as in the present invention have not been elucidated yet. However, it is apparent that potassium ion is antagonistic to magnesium ion, and phosphorus ion is antagonistic to magnesium ion, so that it is conceived that the inhibition of ion pump participates in the effect of excessive magnesium ion on the growth of the vegetation. The mulching composition of the present invention has excellent weed-controlling effect as compared with dolomite, limes, cement and gypsums that have been used as fertilizers, has long-lasting effects and causes no crop injury. What is explained above demonstrates superiority of the present invention experimentally and theoretically and confirms the effect of the present invention. Therefore, the present invention has been accomplished.

### Examples

Hereinafter, the present invention will be explained in detail by examples.

The present invention is not restricted by the following experimental data and is based on wide dose regimen and practical experiments not shown herein.

### Example 1

Various kinds of seeds were soaked in water for one day and then sown on an agar medium (8g of agar, 500 g of water, 30 ml of an activator supplement for plants manufactured by Sakata Seed Co.) and rootstalk was soaked in water for 3 hours and then implanted. The seeds were germinated and cared at 35°C and a humidity of 70%. Under the same conditions, sowing of seeds and implanting of rootstalks were performed and immediately thereafter the seeds and the rootstalks were treated with a 0.7% aqueous dispersion or solution of each agent, and germinated, as compared with the untreated seeds and rootstalks. Table 1 shows the results obtained.

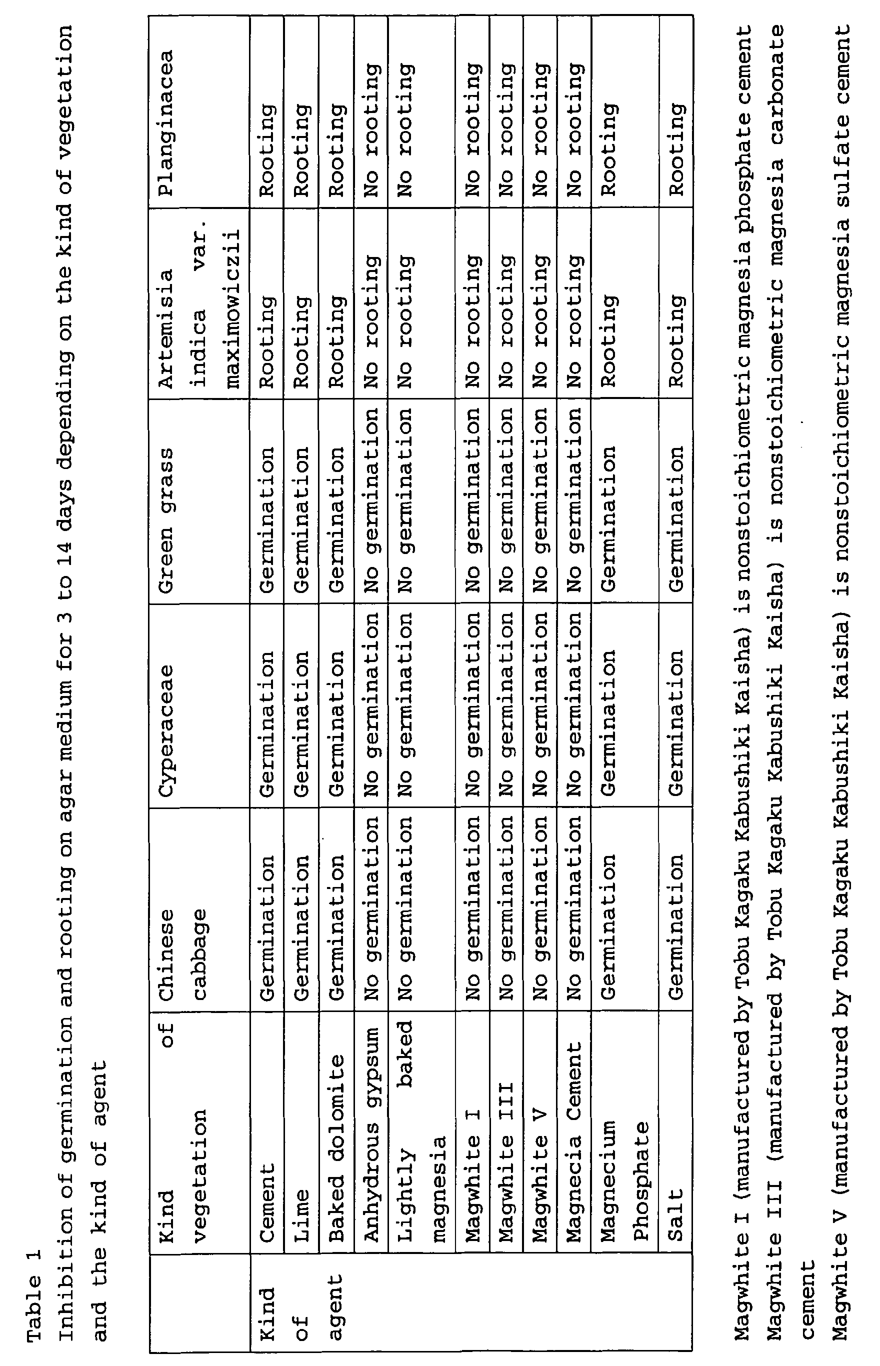

### Example 2

In a planter of 600 × 200 mm was placed culture soil and 5 g of seeds of green grass was sown. A half of the seeds was treated with 15% slurry of nonstoichiometric magnesia carbonate cement and the other half of the seeds was germinated at 25°C as a nontreated section. On comparison, the nontreated section showed a growth of 73% in 13 days. The treated section showed a germination of 17% one year after the treatment.

### Example 3

In a planter of 600 × 200 mm was placed culture soil and 5 g of seeds of Chinese cabbage was sown. A half of the seeds was treated with 10% slurry of nonstoichiometric magnesia phosphate cement and the other half of the seeds was germinated at 20°C as a nontreated section. On comparison, the nontreated section showed a growth after 3 days. The treated section showed no germination six months after the treatment.

### Example 4

In a planter of 600 × 200 mm was placed culture soil and 5 g of seeds of green grass was sown. A half of the seeds was treated with 10% slurry of nonstoichiometric magnesia silicate cement and the other half of the seeds was germinated at 25°C as a nontreated section. On comparison, the nontreated section showed a growth of 63% in 13 days. The treated section showed a germination of 11% one year after the treatment.

### Example 5

In a planter of 600 × 200 mm was placed culture soil and 5 g of seeds of green grass was sown. A half of the seeds was treated with 10% slurry of nonstoichiometric magnesia sulfate cement and the other half of the seeds was germinated at 25°C as a nontreated section. On comparison, the nontreated section showed a growth of 61% in 13 days. The treated section showed a germination of 24% one year after the treatment.

### Example 6

In a planter of 600 × 200 mm was placed culture soil and 5 g of seeds of green grass was sown. A half of the seeds was treated with 15% slurry of nonstoichiometric oxychloride cement and the other half of the seeds was germinated at 25°C as a nontreated section. On comparison, the nontreated section showed a growth of 71% in 13 days. The treated section showed a germination of 18% one year after the treatment.

### Example 7

In a planter of 600 × 200 mm was placed culture soil and 5 g of seeds of green grass was sown. A half of the seeds was treated with 15% slurry of lightly baked magnesia and the other half of the seeds was germinated at 25°C as a nontreated section. On comparison, the nontreated section showed a growth of 85% in 13 days. The treated section showed a germination of 12% one year after the treatment.

### Example 8

In a planter of 600 × 200 mm was placed culture soil and twenty Imperata cylindrica rootstalks of 50 mm long were implanted and covered with soil. A half of the rootstalks was treated with 15% slurry of lightly baked magnesia and the other half of the rootstalks was germinated at 25°C as a nontreated section. On comparison, the nontreated section showed 85% rooting in25 days. The treated section showed a germination of 8% one year after the treatment.

### Example 9

In a planter of 600 × 200 mm was placed culture soil and twenty Artemisia indica var. maximowiczii rootstalks of 50 mm long were implanted and covered with soil. A half of the rootstalks was treated with 25% slurry of lightly baked peridotite powder and the other half of the rootstalks was germinated at 25°C as a nontreated section. On comparison, the nontreated section showed 70% rooting in 25 days. The treated section showed a germination of 6% one year after the treatment.

### Example 10

In a planter of 600 × 200 mm was placed culture soil and twenty Planginacea rootstalks of 50 mm long were implanted and covered with soil. A half of the rootstalks was treated with 25% slurry of lightly baked peridoti te powder and the other half of the rootstalks was germinated at 25°C as a nontreated section. On comparison, the nontreated section showed 67% rooting in 25 days. The treated section showed a germination of 3% one year after the treatment.

### Example 11

In a planter of 600 × 200 mm was placed culture soil and rice plant, Koshihikari, seedlings 16 mm tall were implanted. After 7 days, twenty Scirpus juncoides rootstalks of 50 mm long were planted. Immediately, for a half of the rootstalks, 10% slurry of nonstoichiometric magnesia sulfate cement and 0.1% sodium polyacrylate were applied in water to perform mulching. The slurry did not mix with water in the water and had a high specific gravity of 1.2, so that the slurry settled in the water and scattered on the muddy soil to form a film. The other half as a nontreated section was allowed to take roots at 30°C. Upon comparison, the nontreated section showed 64% rooting in 25 days in contrast to the treated section which showed 3% rooting after three months.

### Example 12

In a planter of 600 × 200 mm was placed culture soil and twenty Artemisia indica var. maximowiczii rootstalks of 50 mm long were implanted and covered with soil. A half of the roots talks as a treated section was treated with 25% slurry of nonstoichiometric magnesia phosphate cement to which 0.4% of Molmaster (cement dispersant) was added. The other half of the rootstalks, nontreated section, was not treated. Upon comparison of rooting, the nontreated section showed 73% rooting in 25 days in contrast to the treated section, which showed 6% rooting after 1 year.

### Example 13

In a planter of 600 × 200 mm was placed culture soil, and seeds of Chinese cabbage and Rumex obtusifolius were mixed sown. After Chinese cabbage seeds were allowed to germinate at 25°C for 4 days and grow to a stage of two leaves or more. In this sate, 25% slurry of nonstoichiometric magnesia phosphate cement to which 0.3% of starch glue was added to increase the viscosity was applied to a half of the seedlings. This half was a treated section. The other half of the seedlings was a nontreated section. Upon comparison of germination at 25°C, the nontreated section showed 73% germination of Rumex obtusifolius in 25 days and in contrast thereto, the treated section showed no germination of Rumex obtusifolius after 3 months, and Chinese cabbage was harvested.

### Example 14

In a planter of 600 × 200 mm was placed culture soil, and seeds of Japanese radish and Persicaria longiseta were mixed sown. After Japanese radish seeds were allowed to germinate at 25°C for 4 days and grow to a stage of two leaves or more. In this state, 15% slurry of nonstoichiometric magnesia carbonate cement to which 0.3% of CMC was added to increase the viscosity was applied to a half of the seedlings. This half was a treated section. The other half of the seedlings was a nontreated section. Upon comparison of germination at 25°C, the nontreated section showed 62% germination of Persicaria longiseta in 28 days and in contrast thereto, the treated section showed no germination of Persicaria longiseta after 4 months, and Japanese radishes were harvested.

### Example 15

In a planter of 600 × 200 mm was placed culture soil and twenty Artemisia indica var. maximowiczii rootstalks of 50 mm long were implanted and covered with soil. A half of the rootstalks was treated with 25% slurry of nonstoichiometric magnesia carbonate cement and a slurry containing 0.1% of hydroxymethylcellulose, which was a treated section. The other half of the rootstalks, nontreated section, was not treated. After 14 days, the treated layer was broken to a depth of 30 mm and seeds of Brassica campestris were sown there. Upon comparison of germination at 25°C, the nontreated section showed 63% rooting in 25 days and grew in contrast to the treated section, which showed no germination of Artemisia indica var. maximowiczii until the harvest of *Brassica campestris,* which took place after 3 months.

### Example 16

In a planter of 600 × 200 mm was placed culture soil, and seeds of carrot (hatsuka ninj in) and Persicaria longiseta were mixed sown. After the carrot seeds were allowed to germinate at 25°C for 9 days and grow to a stage of four leaves or more. In this state, 15% slurry of nonstoichiometric magnesia carbonate cement to which 0.3% of CMC and 0.1% of glycerol fatty acid ester were added to increase the viscosity and air was entrained to form foams was applied to ground surface to perform foam mulching for a half of the seedlings. This half was a treated section. The other half of the seedlings was a nontreated section. Upon comparison of germination at 25°C, the nontreated section showed 62% germination of Persicaria longiseta in 28 days and in contrast thereto, the treated section showed no germination of Persicaria longiseta after 2 months, and the carrots were harvested.

### Example 17

In a planter of 600 × 200 mm was placed culture soil, 15% nonstoichiometric magnesia carbonate cement was mixed with 15% calcium carbonate. To the resultant was added 0.1% hydroxymethylcellulose to form a slurry. A half of the soil was subjected to mulching treatment to obtain a treated section and the other half of the soil was nontreated, which was a nontreated section. After 14 days, the treated layer was broken to a depth of 30 mm, and spinach seeds were sown there. Upon comparison of germination, the nontreated section showed 63% germination in 12 days and grew in the open air in September. The germination of the treated section was 54%. After 3 months, spinach was harvested in both the treated section and the nontreated section. The time of germination in the treated section tended to be delayed and the growth of the treated section tended to be inhibited more or less. After 30 days, substantially no difference was observed between the treated section and the nontreated section and the temperature of the treated section under 100 mm from the surface decreased by 3°C as compared with that of the nontreated section. This indicates that white light reflection by calcium carbonate is effective.

### Example 18

In a planter of 600 × 200 mm was placed culture soil, and a half of the soil was subjected to mulching treatment with a 15% slurry of nonstoichiometric magnesia carbonate cement containing 10% of recycled charcoal and 0.1% of hydroxymethylcellulose to obtain a treated section. The other half was notreated, which was a nontreated section. After 14 days, the treated layer was broken to a depth of 30 mm and spinach seeds were sown there. Upon comparison of germination, the nontreated section showed 63% germination in 12 days in the open air in September. The germination of the treated section was 58%. After 3 months, spinach was harvested in both the treated section and the nontreated section. The time of germination in the treated section tended to be delayed and the growth of the treated section tended to be inhibited more or less due to high temperature injury. Even after 30 days, this tendency did not disappear. The temperature of the treated section under 100 mm from the surface increased by 3°C as compared with that of the nontreated section. There was an influence of absorption of black light by the recycled charcoal.

### Comparative Example 1

Under the same conditions on planter as those in Example 18, the soil was covered with a black mulching film. Comparison of the temperature under 100 mm from the ground surface indicated 12°C and sometimes high temperature injury tended to occur.

### Example 19

In a planter of 600 × 200 mm was placed culture soil, and a half of the soil was subjected to mulching treatment with a 15% slurry of nonstoichiometric magnesia carbonate cement containing 10% of recycled charcoal and 0.1% of hydroxymethylcellulose to obtain a treated section. The other half was notreated, which was a nontreated section. After 14 days, the treated layer was broken to a depth of 130 mm and eggplant seedlings were implanted there. Comparison was made with the nontreated section. As a result of cultivation tests in the treated section and the nontreated section in the open air from June to September, the height of the plant of the treated section was 8% higher than that of the plant of the nontreated section, and the number of the plant harvested was by 14% fewer than that of the treated section.

### Example 20

On May 21, 5.0 liters per square meter (m²) of a slurry obtained by mixing 15% of nonstoichiometric magnesia carbonate cement with 100 fold diluted solution of glyphosate was applied to the bottom weed of an apple orchard in Hirosaki city of Aomori prefecture. The kinds of the bottom weed included Rumex obtusifolius, Trifolium repens, and Artemisia indica var. maximowiczii and these grew to a height of 150 mm. As comparative sections, a glyphosate alone section and a no-glyphosate section were provided and after 3 months the state of growth of weeds was observed. As a result, the section treated with 100 fold diluted solution of glyphosate and 15% of the nonstoichiometric magnesia carbonate cement showed no weed. On the other hand, in the section treated with glyphosate alone, the weed again grew and showed spindly growth to a height of 230 mm. Among the no-glyphosate sections, the 25% treated section showed 1/3 spindly growth of weeds. From the viewpoint of the thickness of the weed, mixed application of the herbicide and the nonstoichiometric magnesia carbonate cement was very effective and the mixed treatment section inhibited the growth of the weeds until October.

### Example 21

In a planter of 600 × 200 mm was placed culture soil and rice plant, Koshihikari, seedlings 16 mm tall were implanted. At the same time, Echinoclhoa oryzicola seeds were sown and twenty Eleocharis acicularis rootstalks were implanted. These were allowed to germinate or take roots at 30°C for 1 month in shallow water. A half of the planter was treated with a powder containing a mixture of 0.003 g of pulverized Saturn S granules and 10 g of nonstoichiometric magnesia sulfate cement to obtain a treated section, and the other half of the planter was not treated and left stand as it was for 7 days to obtain a nontreated section. Thereafter, Koshihikari was grown. In the nontreated section, Echinoclhoa oryzicola and Eleocharis acicularis grew. However, in the treated section, Echinoclhoa oryzicola and Eleocharis acicularis completely killed. This effect lasted until the end of September. Upon comparison of crop yields, the treated section was greater by 32%. In the case of Saturn S granules alone, the control of weeds lasted for as short as 3 months.

### Example 22

In July, in the land of 3.3 m² where weeds grew in Tsukuba City in Ibaraki Prefecture, mixed growing weeds to a height of about 300 mm were mown and a mixture of 3 g of Kusanon P granules and 100 g of nonstoichiometric magnesia carbonate cement was applied there. For comparison, a nontreated land, a land treated with 3 g of Kusanon P granules, a land treated with 100 g of the nonstoichiometric magnesia carbonate cement were provided and the growth state of weeds was observed for 4 months. On the land treated with 3 g of kusanon P granules and 100 g of the nonstoichiometric magnesia carbonate cement, the weeds completely killed until the experiment was completed. On the land treated with 3 g of Kusanon P granules, the weeds grew in 56 days. On the land treated with 100 g of the nonstoichiometric magnesia carbonate cement, the weeds grew in 30 days. These results indicate that a mixed system of the herbicide and the nonstoichiometric magnesia carbonate cement inhibits the growing rootstalks for the longest time and is more effective than the herbicide alone while the nonstoichiometric magnesia carbonate cement alone shows a weed-controlling effect that lasts for a shorter time to the growing root stalks.

### Example 23

5%, 10%, 15%, and 20% slurries of nonstoichiometric magnesia phosphate cement were applied to a dry field in amounts of 3 liters per square meter (m²) to solidify the surface soil. After one day, sprinkler water shower was performed on the mulched surface in a rate of 100 mm per hour and washout of the soil was examined. With 5% mulching, a small amount of turbid water occurred. On the other hand, with 10%, 15%, and 20% mulching, no turbid water occurred. Further, when 0.3% of reemulsified vinyl acetate resin (trade name: Movineal Powder SA) was added as a glue material to increase the viscosity, only the surface could be solidified without penetration of the nonstoichiometric magnesia carbonate cement into the soil. Accordingly, the thickness of mulch could be controlled to 0.1 mm to 5.0 mm by adjusting the viscosity of the glue material. As a result, a firm mulching layer was formed, so that neither erosion of the surface soil nor muddy water occurred with the nonstoichiometric magnesia phosphate cement in a concentration of 5% at an hourly rainfall of 200 mm.

### Example 24

A mixture of 100 g of nonstoichiometric magnesia carbonate cement and 5 liters of a natural rubber latex emulsion (40% content being diluted 20 folds) was applied to a dry field. The mulched surface had flexibility, showing 40% elongation. Moreover, when the amount of the natural rubber latex doubled, 70% elongation was observed. Thus, mulching that endures treading can be obtained.

### Example 25

100 parts by weight (moisture content: 24%) of Okinawa red soil, 10 parts by weight of nonstoichiometric magnesia carbonate cement, and 26 parts by weight of water were mixed at 60 rpm for 30 minutes using a ribbon mixer and the mixture was granulated to obtain soil particles containing 4% or more of particles of a size of 25 mm, 48% of particles of a size of 14 mm, 37% of particles of a size of 8 mm, and 11% of particles having a size no more than 4 mm. Such a granular mulching material was obtained that showed no occurrence of red water in the case of 100 mm rainfall when the soil granules were bedded on red soil to a thickness of 20 mm and also showed no occurrence of red water in the case of 200 ml rainfall when the thickness was 40 mm.

### Example 26

100 parts by weight (moisture content: 38%) of Kanto loam, 7 parts by weight of nonstoichiometric magnesia carbonate cement, and 34 parts by weight of water were mixed at 60 rpm for 30 minutes using a ribbon mixer and the mixture was granulated to obtain soil particles containing 3% or more of particles of a size of 25 mm, 49% of particles of a size of 14 mm, 35% of particles of a size of 8 mm, and 13% of particles having a size no more than 4 mm. The soil granules were filled around a corrugated pipe having an inner diameter of 50 mm in an acrylic resin pipe having a diameter of 100 mm. Water permeability tests were performed, and the results of the tests indicated that soil particles having a porosity of 34% that allowed 10 liters of water to pass therethrough in 2 minutes were obtained. When the soil particles were applied to corn seedling grown to a height of 10 mm, the obtained granular mulching material inhibited the growth of weeds therearound for 4 months.

### Example 27

100 parts by weight of waste paper, 1,000 parts by weight of Kanto loam, 70 parts by weight of nonstoichiometric magnesia carbonate cement, 3 parts by weight of Riedel granules, and 750 parts by weight of water were charged in a pan type mixer and mixed. The obtained mixture was molded into scales using a single press roll to obtain a mulching material for paddy field having a specific gravity of 1.26. This was applied to Koshihikari implanted in a planter 7 days after the rice transplanting to settle on the muddy soil, and the state of no weed could be maintained until the harvest.

### Example 28

Lettuce seedling was fix-planted on a dry field with high ridges. After 3 days from the planting, a slurry obtained by adding 5% of slow-acting fertilizer to 15% of nonstoichiometric magnesia carbonate cement and mixing was applied to the dry field in amounts of 5.0 liters per square meter (m²). As a result, no crop injury to lettuce occurred and the germination number of weeds after 30 days was 16 per square meter (m²). On a comparative nontreated dry field, germination of weeds occurred after 7 days and grew to approximately the same height as that of the lettuce in 30 days.

### Example 29

A slurry obtained by mixing 100 fold-diluted solution of glyphosate, 15% nonstoichiometric magnesia carbonate cement, and 5% slow-acting fertilizer was applied to a dry field in an amount of 5.0 liters per square meter (m²). This was left to stand for 7 days and then excavations having a depth of 100 mm and a diameter of 60 mm were provided and lettuce seedling was fix-planted therein. For comparison, in the nontreated dry field, germination of weeds began after 6 days and grew to a height of 14 mm after 28 days. The treated dry field showed no germination of weed in the same period of time, the growth of lettuce was the same between the nontreated dry field and the treated dry field.

### Example 30

For soybean, Tachinagaha, that germinated and grew to a height of 120 mm, 10%, 15%, 20%, and 30% slurries of nonstoichiometric magnesia carbonate cement were applied in amounts of 5.0 liters per square meter (m²), and growth of weeds was observed. After 1 month, the number of weed in the nontreated section was 27 per square meter (m²), the number of weed in the 10% section was 6 per square meter (m²), the number of weed in the 15% section was 4 per square meter (m²), the number of weed in the 20% section was 3 per square meter (m²), and the number of weed in the 30% section was 0.

### Example 31

On a dry field treated with glyphosate was fix-planted Welsh onion. After 7 days, a slurry obtained by dispersing 10 parts by weight of recycled charcoal, 50 parts by weight of anhydrite, 100 parts by weight of nonstoichiometric magnesia carbonate cement, and 4 parts by weight of alkali starch in 1,000 parts by weight of water was applied in an amount of 5.0 liters per square meter (m²) to perform mulching. For comparison, a nontreated section was provided. Upon comparison of growth of weeds for 3 months, the number of weeds was 19 per square meter (m²) in the treated section while the number of weeds per square meter (m²) was 34 in the nontreated section. The kind of weed that germinated in the nontreated section was of seed germination and apparently the kinds of weeds were different from those of the germinated weeds in the treated area.

## Claims

1. A weed-controlling mulching composition comprising a slurry comprising from 3 to 30% by weight of magnesia cement having a chemical composition comprising lightly baked magnesia and being non-stoichiometric and from 97 to 30% by weight of water.

2. The weed-controlling mulching composition according to claim 1, further comprising a glue material.

3. The weed-controlling mulching composition according to claim 1 or 2, further comprising a herbicide.

4. The weed-controlling mulching composition according to any one of claims 1 to 3, further comprising a colorant.

5. The weed-controlling mulching composition according to any one of claims 1 to 4, further comprising a fertilizer.

6. The weed-controlling mulching composition according to any one of claims 1 to 5, further comprising a foaming agent.

7. The weed-controlling mulching composition according to any one of claims 1 to 6, the composition being molded into scales.
